# EUROPEAN PATENT SPECIFICATION

(11) **EP 3 447 103 B1**
(45) Date of publication and mention of the grant of the patent: **11.08.2021**
(21) Application number: 17785781.0
(22) Date of filing: 04.04.2017
(51) Int. Cl.: F16D 69/02, C01G 23/00

(54) **FRICTION MATERIAL**
REIBUNGSMATERIAL
MATÉRIAU DE FROTTEMENT

(30) Priority: 19.04.2016 JP 2016083851
(43) Date of publication of application: 27.02.2019
(73) Proprietor: Nisshinbo Brake Inc., Chuo-ku Tokyo 103-8650 (JP)
(72) Inventor: TANAKA, Takao, Oura-gun Gunma 370-0614 (JP); IWAI, Tomomi, Oura-gun Gunma 370-0614 (JP); YAGUCHI Mitsuaki, Oura-gun Gunma 370-0614 (JP)
(74) Representative: Flügel Preissner Schober Seidel
(86) International application number: PCT/JP2017/014028
(87) International publication number: WO 2017/183439

(56) References cited:
- WO-A1-2012/066964
- WO-A1-2014/098215
- WO-A1-2014/185307
- JP-A- H10 287 424
- JP-A- 2000 160 135
- JP-A- 2002 371 266
- JP-A- 2014 189 612
- JP-A- 2015 147 913
- JP-A- 2015 147 913
- US-A1- 2016 046 772

## Description

### Technical Field

This invention relates to a friction material used for a disc brake pad such as for an automobile, which is made from a friction material composition made of NAO (Non-Asbestos-Organic) material.

### Field of the Invention

Conventionally, a disc brake is utilized as a brake device of a passenger car, and a disc brake pad made by fixing the friction material on a metal base member, is utilized as a friction member of the disc brake.

Recently, quietness or stillness in a braking operation is in demand, and a friction material using NAO friction material composition which generates less braking noise has been widely used.

The NAO friction material composition includes a binder, a fiber base material other than steel base fibers such as a steel fiber and a stainless steel fiber, a friction modifier, a lubricant, a pH adjuster, and a filler. Recently, a titanate such as a potassium titanate, a lithium potassium titanate, and a magnesium potassium titanate has widely been used as the friction modifier.

The Patent Document 1 discloses the friction material that does not contain the metal fiber and the copper constituent but contains 10 - 35 volume % of the potassium titanate having a plurality of protrudent shapes, 3 - 10 volume % of the abrasive which has Moh's hardness of 7 or more , and 10 - 30 volume % of an elastomer modified phenolic resin.

The Patent Document 2 discloses the friction material manufactured by forming the non-asbestos friction material composition that contains the binder, the organic filler, the inorganic filler, and the fiber base material, where the copper content in the friction material composition includes the copper element of 0.5 mass % or less relative to the total amount of the friction material composition and the metal fibers other than copper and copper alloy of 0.5 mass % or less relative to the total amount of the friction material composition; the friction material composition includes the titanate and the antimony trisulfide; the titanate is either the lithium potassium titanate or the magnesium potassium titanate; and the content of the titanate is 14 - 20 mass % relative to the total amount of the friction material composition, and the content of the antimony trisulfide is 2 - 6 mass % relative to the total amount of the friction material composition.

However, the friction materials in the Patent Document 1 and the Patent Document 2 have problems of insufficiency in satisfying the requirements of such as the braking effectiveness, crack resistance and fade resistance.

The titanate used in the friction material may be the tunnel crystal structure titanate and the layer crystal structure titanate, where the tunnel crystal structure titanate may be such as the potassium hexatitanate, the potassium octatitanate, and the sodium hexatitanate while the layer crystal structure titanate may be such as the lithium potassium titanate and the magnesium potassium titanate.

Then, the titanate is known to have a characteristic of causing the elution of alkali.

The Patent Document 3 discloses the elution of alkali with respect to the titanate as follows.

The alkali elution rate with respect to the titanate compound may be 15 mass % or less, preferably 0.1 - 15 mass %, more preferably 0.1 - 10 mass % and further more preferably 0. 1 - 6 mass %. Utilizing the titanate compound inhibits the fading phenomenon and improves the wear resistance. Alkali component generated as the result of wear and tear destruction of the titanate compound seems to have an influence on the generation of the decomposed gas of the organic constituent and the transfer film. Also, the alkali elution rate means the mass rate of the alkali metal and the alkali-earth metal eluted from the titanate compound in the water at 80 centigrade.

In the Patent Document 3, with respect to the numeric value of the alkali elution rate of the titanate, although the layer crystal structure titanate and the tunnel crystal structure titanate are not distinguished, the numeric value of the alkali elution rate is known to be different between the tunnel crystal structure titanate that does not tend to elute alkali and the layer crystal structure titanate that tends to elute alkali.

At present, generally the alkali elution rate of the titanate used in the friction material is such that the tunnel crystal structure titanate is less than 2.0 mass % and the layer crystal structure titanate is 2.6 mass % or more.

The crystal structures and the numeric values of the alkali elution rate of the titanates described in the Patent Document 3 and the Patent Document 4 are shown in a TABLE 1.

**[TABLE 1]**

| Patent Document | Name of Titanate | Crystal Structure | Alkali Elution Rate |
|---|---|---|---|
| Patent Document 3 | potassium octatitanate | tunnel crystal structure | 0.2 mass % |
| | magnesium potassium titanate | layer crystal structure | 5.3 mass % |
| | potassium hexatitanate | tunnel crystal structure | 0.1 mass % |
| Patent Document 4 | potassium hexatitanate | tunnel crystal structure | 0.1 mass % |
| | potassium octatitanate | tunnel crystal structure | 0.2 mass % |
| | potassium hexatitanate | tunnel crystal structure | 0.2 mass % |
| | magnesium potassium titanate | layer crystal structure | 2.7 mass % |
| | lithium potassium titanate | layer crystal structure | 2.6 mass % |

From the TABLE 1, conventionally, it is understood that the layer crystal structure titanate showing less than 2.6 mass % of the alkali elution rate is not used.

Also, it is known that reducing the alkali elution rate of the titanate reduces the acceleration degradation effect on the organic substance due to the alkaline component when the high temperature and high load braking, thereby reducing the fade resistance. Accordingly, the layer crystal structure titanate with reduced alkali elution rate has not been an option for this purpose.

Patent Document 5 discloses a friction material composition, a friction material and a friction member having excellent abrasion resistance and stability of a friction coefficient in braking under high temperature and high loads without using copper having a high environmental load. The friction material composition comprises a binder, an organic filler, an inorganic filler and a fiber substrate, wherein the content of copper in the friction material composition is 0.5 mass% or less as a copper element and the friction material composition contains a titanate having a tunnel-like crystal structure and a titanate having a laminar crystal structure as a titanate.

Patent Document 6 describes a resin composition that can be given excellent formability and wear resistance when used as a friction material or the like; and a method for producing the resin compound. A titanate compound, which is a salt of at least one element selected from the group consisting of alkali metals and alkaline earth metals, is dispersively contained in a thermosetting resin prior to curing.

### Prior Art Documents

### Patent Documents

Patent Document 1: Japanese Provisional Patent Publication No. 2014-122314
Patent Document 2: Japanese Provisional Patent Publication No. 2016-824
Patent Document 3: Japanese Provisional Patent Publication No. 2014-224175
Patent Document 4: Japanese Provisional Patent Publication No. 2014-189612
Patent Document 5: JP 2015 147913 A
Patent Document 6: US 2016/046772 A1

### Summary of Invention

### Problems to Resolve by the Invention

This invention relates to a friction material for a disc brake pad as defined in present claim 1, where the resulted friction material can provide excellent braking effectiveness, crack resistance and fade resistance.

### Means to Resolve the Problems

Inventors of this invention, after serious investigation, found that the friction material as defined in present claim 1 can sufficiently satisfy the required performance with respect to the excellent braking effectiveness, the crack resistance, and the fade resistance, and by including the predetermined amount of the monoclinic crystal zirconium oxide as the friction modifier and the fibrillated organic fiber as the fiber base material to the friction material composition, the resulted friction material can improve the braking effectiveness, the crack resistance, and the fade resistance.

### Advantage of the Invention

According to this invention, the friction material as defined in present claim 1 satisfies requirements of the excellent braking effectiveness, crack resistance, and fade resistance.

### Embodiments of the invention

The layer crystal structure titanate tends to form a stable film on a sliding surface of the mating member comparing with the tunnel crystal structure titanate. By adding 5 - 30 mass % of such layer crystal structure titanate, relative to the total amount of the friction material composition, the braking effectiveness can be improved to satisfy the required performance.

Also, using the layer crystal structure titanate with the alkali elution rate of 0.1 mass % or more but 2.5 mass % or less helps not to hinder an curing reaction of a thermosetting resin as the binder during the heat press forming, and as a result, the mechanical strength of the friction material increases and the crack resistance during the high temperature and high load braking can be improved.
More preferably the layer crystal structure titanate with the alkali elution rate of 0.5 mass % or more but 1.5 mass % or less.

As the layer crystal structure titanate, one type or a combination of two types selected from the magnesium potassium titanate and lithium potassium titanate may be used. In order to improve the fade resistance, the use of magnesium potassium titanate with high heat-resisting property alone is preferred.

Furthermore, by adding 5 - 25 mass % of the monoclinic crystal zirconium oxide, relative to the total amount of the friction material composition, as the friction modifier, and 1 - 5 mass % of the fibrillated organic fiber, relative to the total amount of the friction material composition, as the fiber base material, the fade resistance can be improved.

The monoclinic crystal zirconium oxide is characterized to cause volumetric shrinkage at high temperature and to make tetragonal phase transition.
Therefore, during the high temperature and high load braking, the zirconium oxide makes phase transition to shrink the volume, thereby tending to displace the same from the matrix.
The displaced zirconium oxide is supplied onto the friction surface, and by the grinding effect of the zirconium oxide, the frictional destruction of the layer crystal structure titanate progresses and the alkali component is released from the titanate.

Also, by adding the fibrillated organic fiber, the friction material obtains appropriate water absorbency, and atmospheric moisture tends to be absorbed inside the friction material.
The atmospheric moisture absorbed inside the friction material tends to release the alkali component of the layer crystal structure titanate.

When the layer crystal structure titanate with relatively lower alkali elution rate is used, a multiplier effect of the above-described effect, during the high temperature and high load braking, allows to supply sufficient alkali component onto the friction surface, thereby promoting the decomposition of the organic substance. As a result, the fade resistance is improved.

Using the monoclinic crystal zirconium oxide with the average particle diameter of 1.0 - 3.0µm improves the frictional resistance and reduces the aggressiveness against the mating surface.
Also, the average particle diameter, measured by the laser diffraction size analyzing method, is 50% particle diameter.

As the fibrillated organic fiber, one type or any combination of two or more types of fibers selected from the aramid fiber, the cellulose fiber, and the polyacrylonitrile fiber can be used. In order to improve the crack resistance, it is preferable to use the aramid fiber alone which has a higher reinforcing effect.

The binder may be binders that are generally used for the friction material such as a straight phenolic resin, the resin as a result of modifying the phenolic resin by a cashew oil, various elastomers such as an acryl rubber and a silicone rubber, an aralkyl modified phenolic resin obtained by reacting the phenol compound, aralkyl ethyl compound and an aldehyde compound, and a thermosetting resin obtained by dispersing such as various elastomers or fluoropolymer in the phenolic resin, one type or any combination of two or more types may be used.

The amount of the binder, for the purpose of securing the mechanical strength and wear resistance, is preferably 7 - 15 mass % relative to the total amount of the friction material composition but more preferably 8 - 12 mass % relative to the total amount of the friction material composition.

The fiber base material, in addition to the above-described fibrillated organic fiber, may be metal fibers such as a copper fiber, a bronze fiber, a brass fiber, an aluminum fiber and an aluminum alloy fiber, and one type or any combination of two or more types may be used.

When the metal fiber is used, the content of the fiber base material together with the above-described fibrillated organic fiber is 2 - 20 mass % relative to the total amount of the friction material composition but more preferably 3 - 15 mass % relative to the total amount of the friction material composition.

The inorganic friction modifier, in addition to the above-described layer crystal structure titanate and the monoclinic crystal zirconium oxide, may be a particle inorganic modifier such as the stabilized zirconium oxide, a zirconium silicate, a magnesium oxide, an α-alumina, a γ-alumina, a talc, a mica, a vermiculite, a zinc particle, a copper particle, a brass particle, an aluminum particle, an aluminum alloy particle, and a tunnel crystal structure titanate and a fiber inorganic friction modifier such as a wollastonite, a sepiolite, a basalt fiber, a grass fiber, a biosoluble ceramic fiber, and a rock wool. In this invention, one type or any combination of two or more types of the above-inorganic friction modifier may be used.

The amount of the inorganic friction modifier together with the above-described layer crystal structure titanate and the monoclinic crystal zirconium oxide is preferably 30 - 70 mass % relative to the total amount of the friction material composition but more preferably 40 - 60 mass % relative to the total amount of the friction material composition.

The organic friction modifier may be a cashew dust, a pulverized powder of a tire tread rubber, or a vulcanized rubber powder or an unvulcanized rubber powder of a nitrile rubber, an acrylic rubber, a butyl rubber, a silicone rubber and so on. In this invention, one type or any combination of two or more types of the above-organic friction modifier may be used.

The amount of the organic friction modifier contained in the friction material composition is preferably 3 - 8 mass % relative to the total amount of the friction material composition but more preferably 4 - 7 mass % relative to the total amount of the friction material composition.

The lubricant may be such as metal sulfide type lubricants such as a zinc sulfide, a molybdenum disulfide, a tin sulfide, an iron sulfide, and a composite metal sulfide and carbon type lubricants such as a synthetic graphite, a natural graphite, an exfoliated graphite, a petroleum coke, a resilient graphitic carbon, and a polyacrylonitrile oxidized fiber pulverized powder, which are normally used in the friction material. In this invention, one type or any combination of two or more types of the above-lubricants may be used.

The amount of lubricant is preferably 3 - 8 mass % relative to the total amount of the friction material composition but more preferably 4 - 6 mass % relative to the total amount of the friction material composition.

The pH adjuster, such as a calcium hydroxide, which normally used for the friction material may be used.
The amount of pH adjuster is preferably 2 - 6 mass % relative to the total amount of the friction material composition but more preferably 2 - 3 mass % relative to the total amount of the friction material composition.

The filler may be such as a barium sulfate and a calcium carbonate.

Also, with respect to the copper component contained in the friction material, California State (CA) and Washington State (WA) of the United States of America passed a bill to prohibit the sales of the friction member using the friction material containing 5.0 mass % or more of the copper component relative to the total amount of the friction material composition and an act of assembling the subject friction member in a new car from the year of 2021, and to prohibit the sales of the friction member using the friction material containing 0.5 mass % or more of the copper component relative to the total amount of the friction material composition and an act of assembling the subject friction member in a new car from the year of 2025. Accordingly, preferably, the copper component such as the fiber and particles containing copper is added to the friction material composition so as to conform to the regulations but more preferably the copper component is not added to the friction material composition.

The friction material of this invention is manufactured through a mixing step for mixing the predetermined amount of the friction material composition uniformly using a mixer so as to obtain a raw friction material mixture, a heat press forming step for heat press forming the raw friction material mixture superposed on a back plate which is pre-washed, surface-treated, and adhesive coated to obtain a molded article, a heat treatment step for completing the curing effect of the binder by heating the molded article to obtain heated article, a coating step for coating the heated article with such as splay coating and electrostatic powder coating to obtain coated article, a coating baking step for baking the coating on the coated article to obtain a backed article, and grinding step for grinding the backed article by the rotating grinding stone.

Yet, after the heat press forming step, the coating step, the heat treatment step doubling the coating baking step and the grinding step may be allowed.
As necessary, prior to the heat press forming step, a granulating step for granulating the raw friction material mixture, a kneading step for kneading the raw friction material mixture, and a preforming step for forming an intermediate preformed product by molding the raw friction material mixture, the granulated friction material composition obtained through the granulating step or the kneaded friction material composition obtained through the kneading step in the preforming die, may be performed, and a scorch step may be performed after the heat press forming step.

### [Embodiments]

In the following sections, the embodiments and the comparative examples are shown to give more specific explanations of this invention; however, this invention is not limited to what is described in the following embodiments and comparative examples.

### [Manufacturing method for the friction material embodiments 1 - 19 and comparative examples 1 - 4]

The friction material composition shown in TABLE 2, TABLE 3, and TABLE 4 is mixed for 5 minutes with the Loedige mixer and is pressed in the forming die for 10 seconds under 30MPa for form the intermediate preformed product. This intermediate preformed product is superposed on the steel back plate that is pre-washed, pre-surface treated, and pre-adhesive coated, formed in the heat forming die at 150 degrees centigrade of the forming temperature under 40MPa of the forming pressure for 10 minutes. After that, heat-treated (cured) at 200 degrees centigrade for 5 hours, and grinded to form the friction surface in order to manufacture the disc brake pad for a passenger car. (See Embodiments 1 - 19 and Comparative Examples 1 - 4)

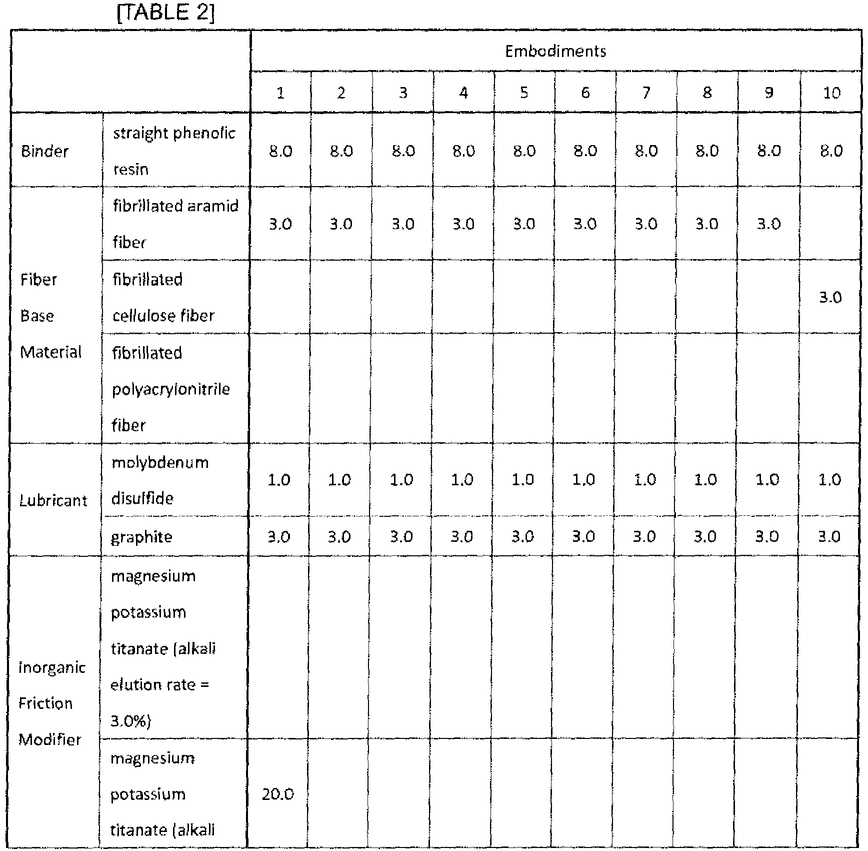

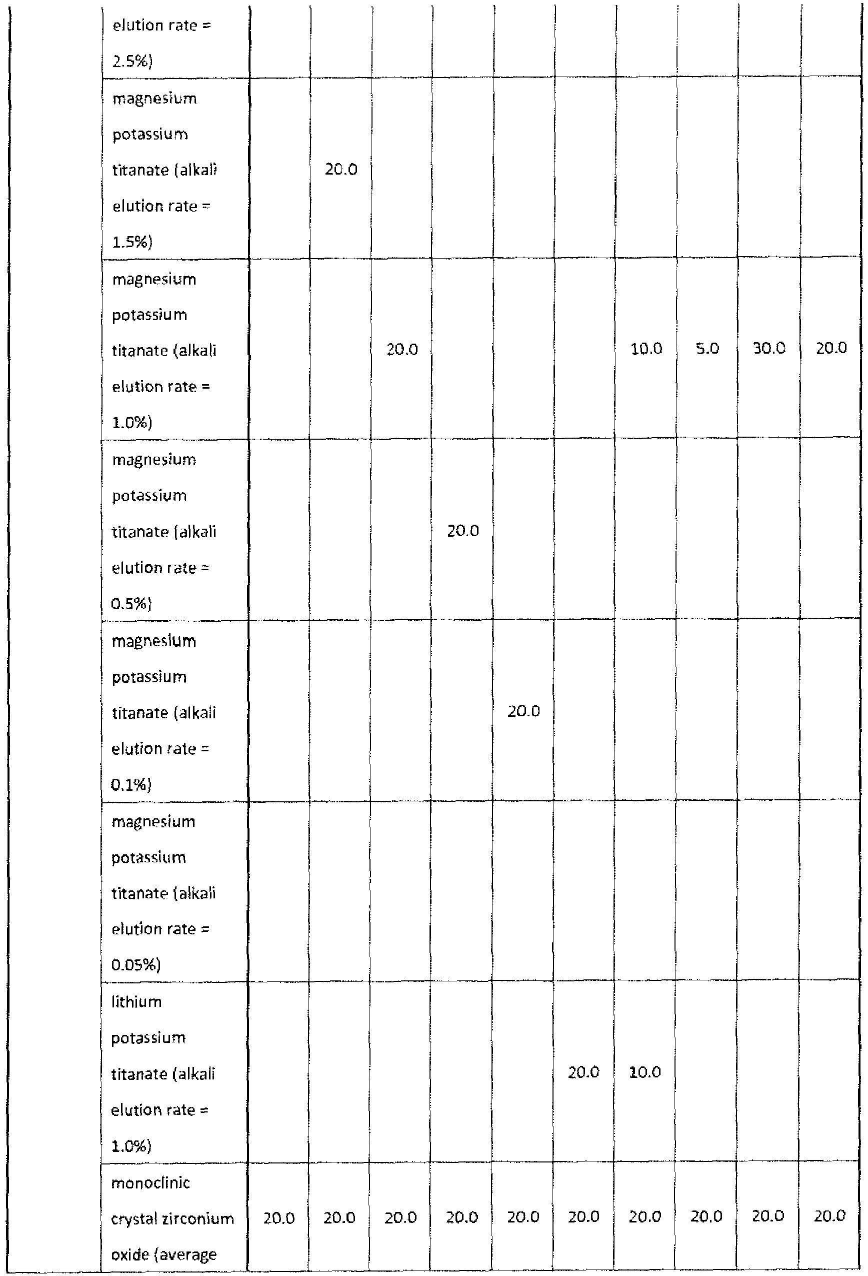

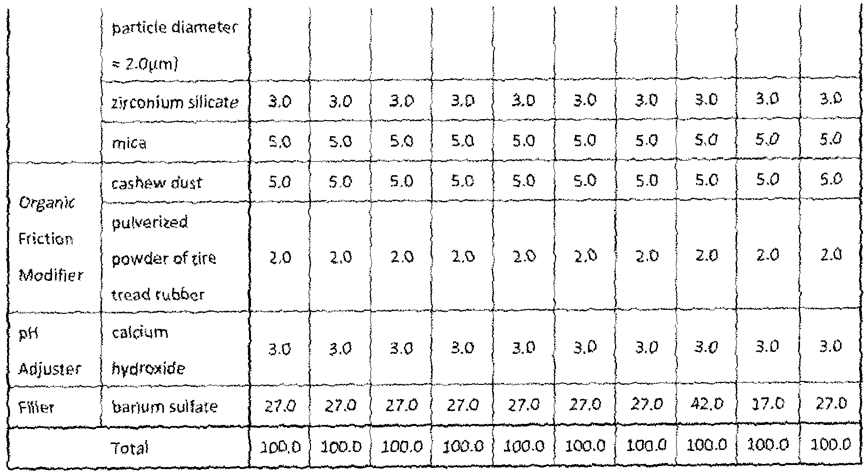

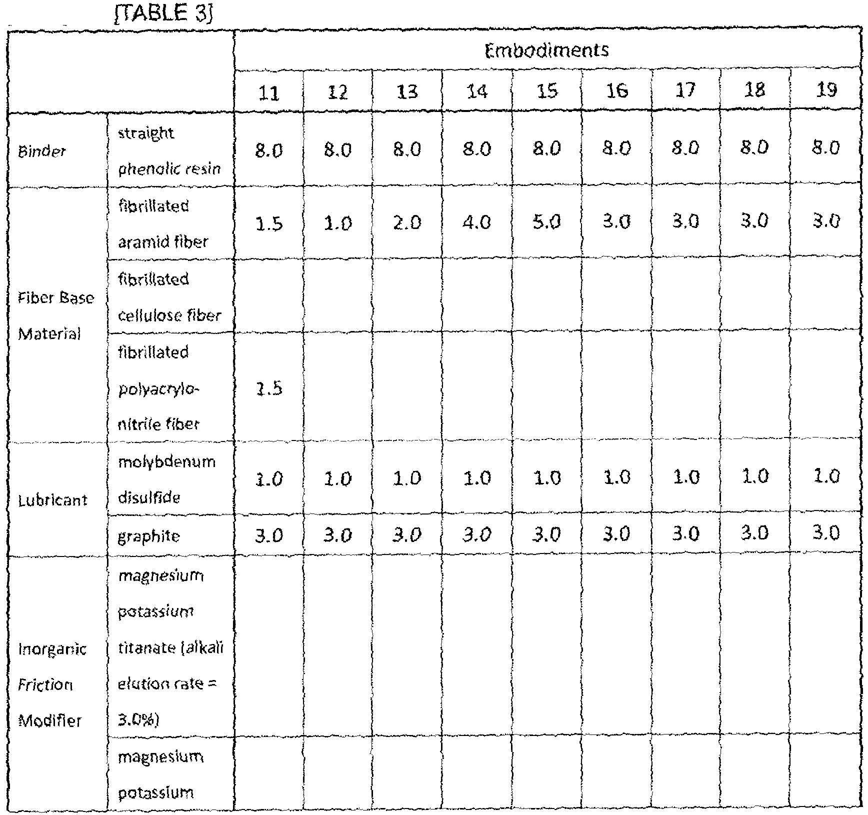

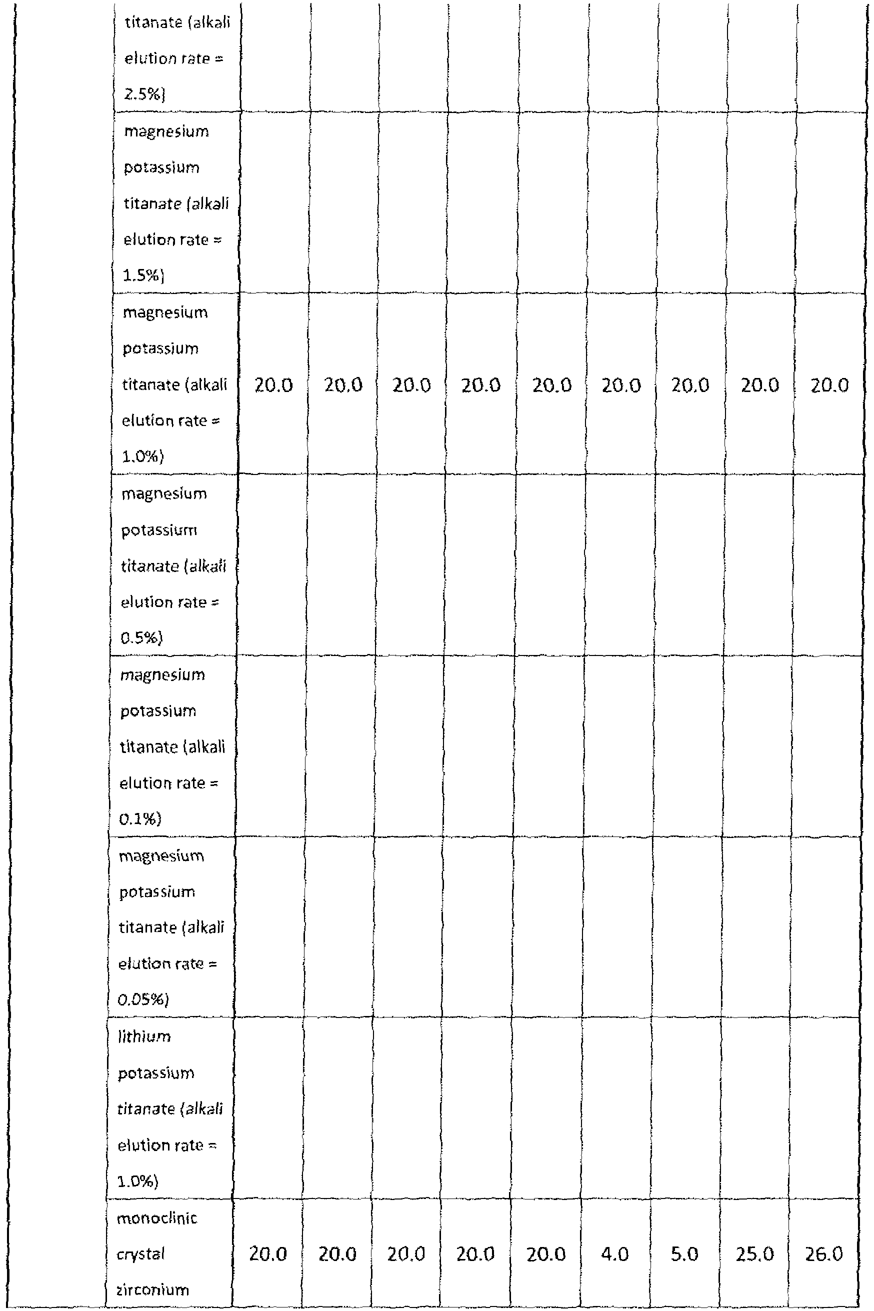

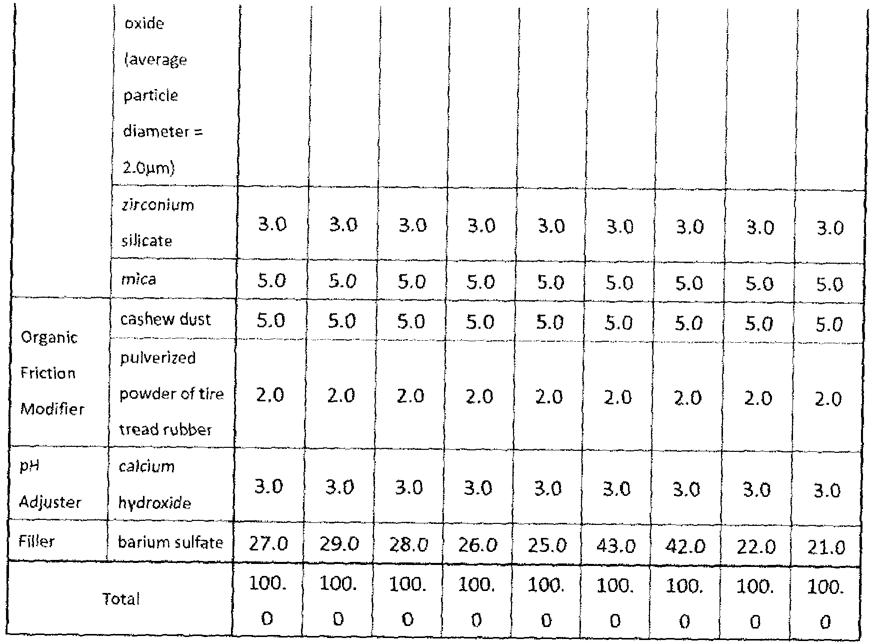

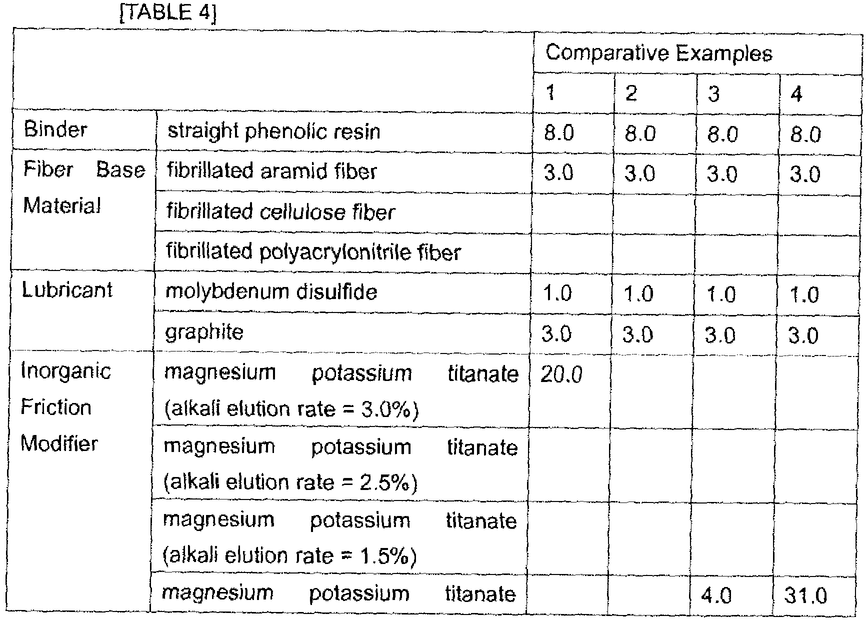

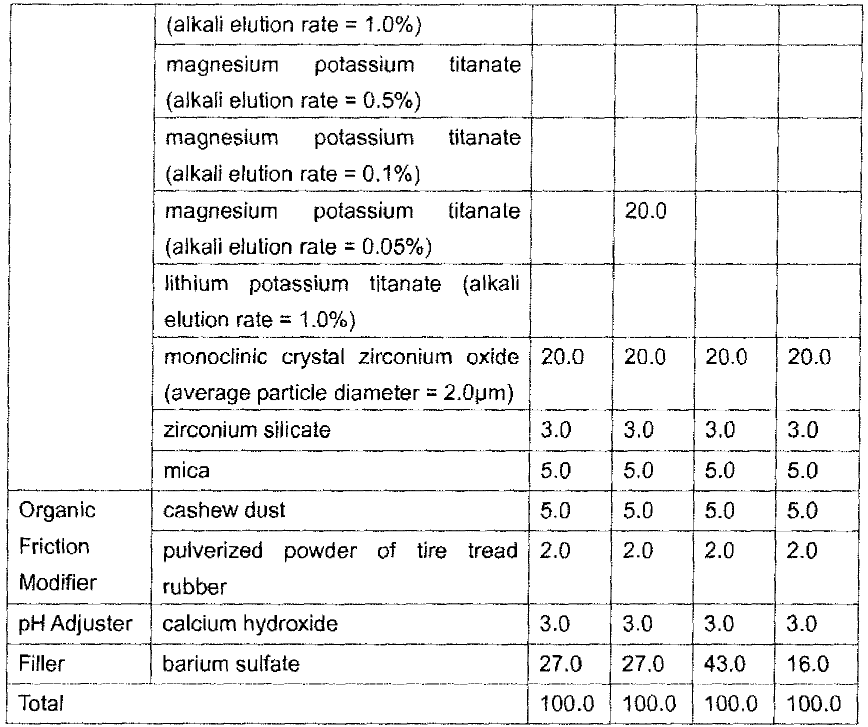

The braking effectiveness, the crack resistance, and the fade resistance of these disc brake pads are evaluation based on the conditions shown in TABLE 5. The evaluation standard is shown in TABLE 5, and the evaluation results are shown in TABLE 6, TABLE 7, and TABLE 8.

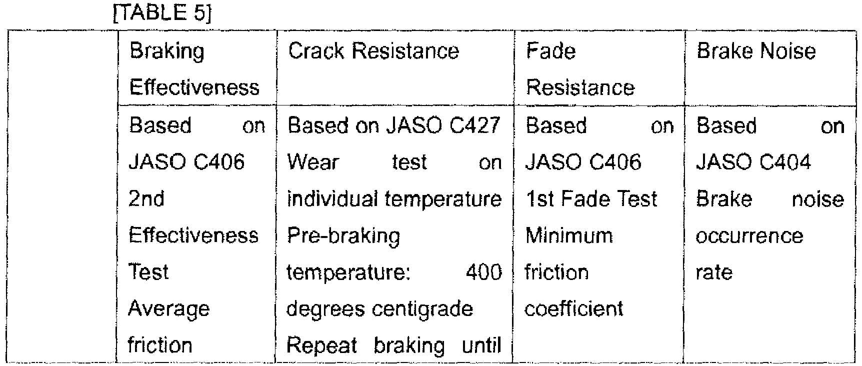

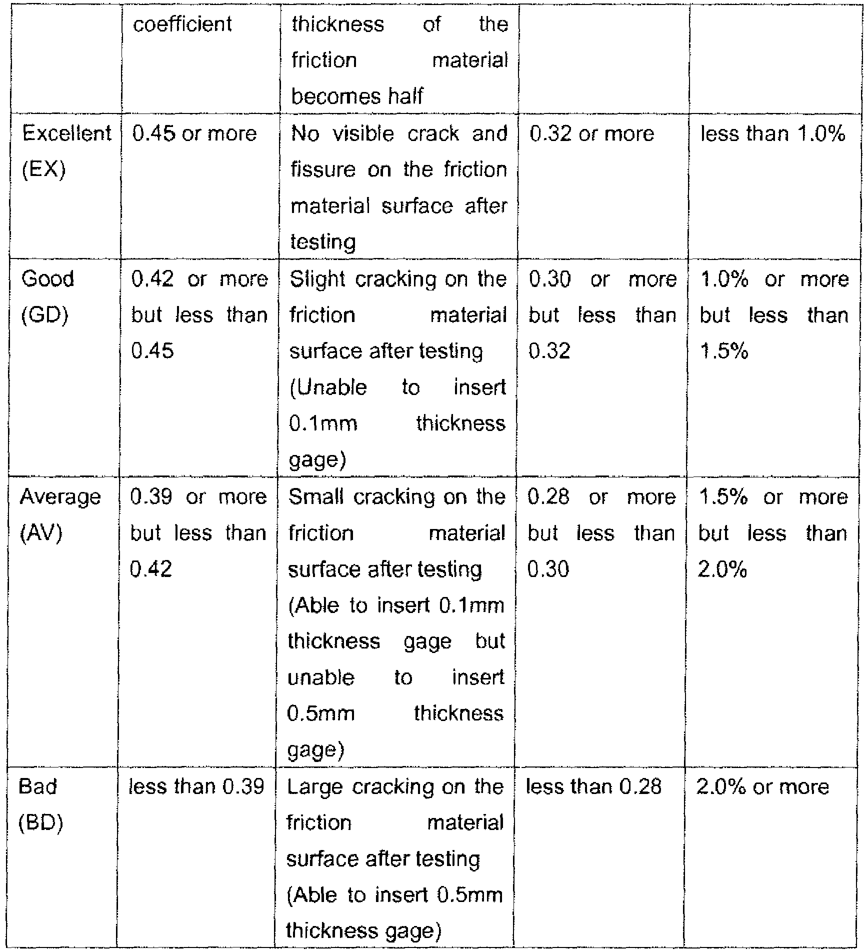

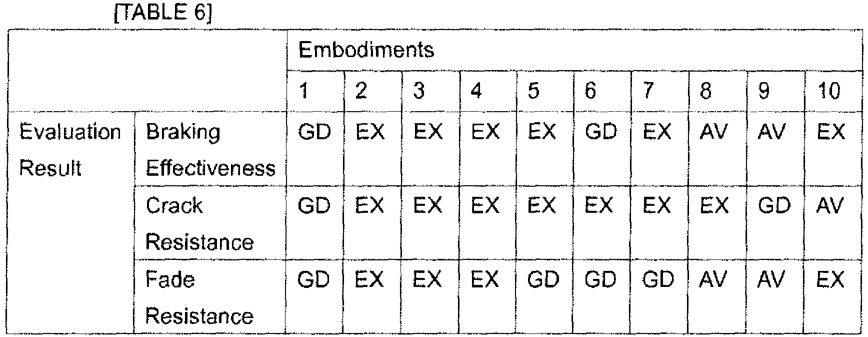

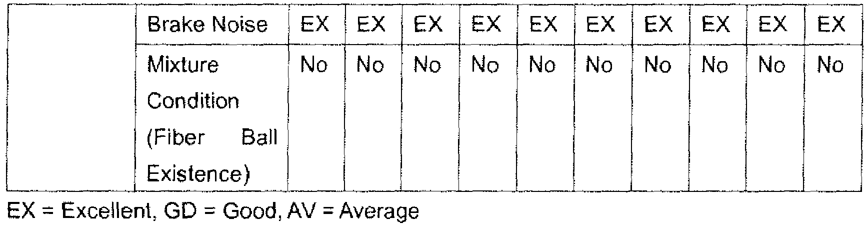

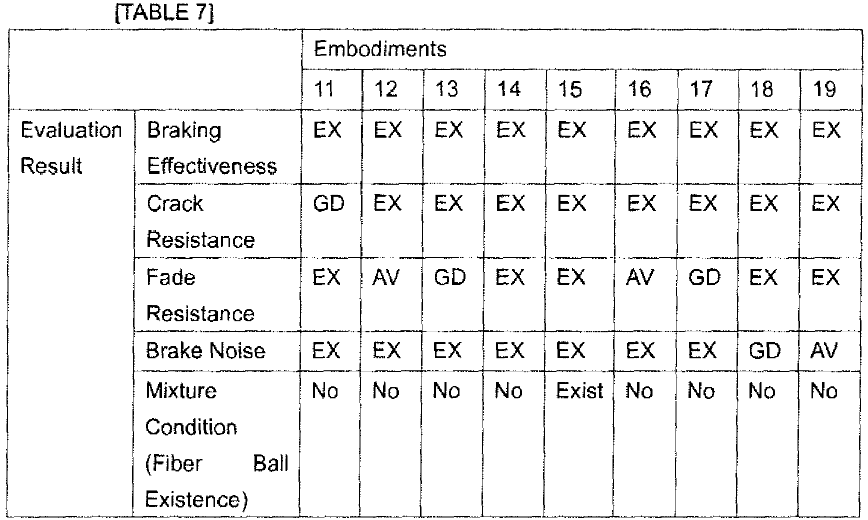

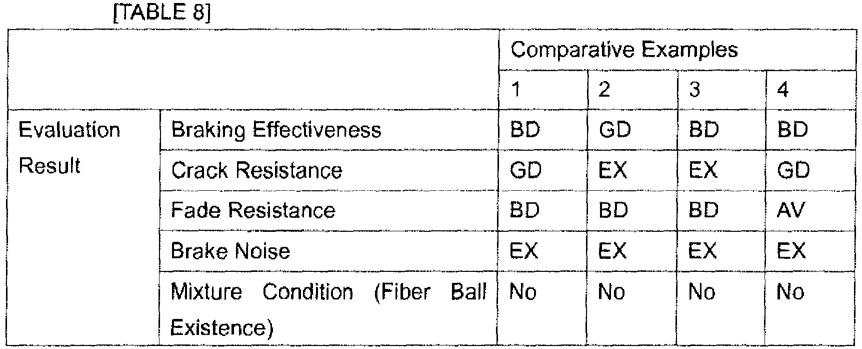

From the respective TABLES, the friction materials satisfying the conditions described in this invention show excellent braking effectiveness, crack resistance, and fade resistance.

### Industrial Applicability

According to this invention, the friction material for the disc brake pad, which is manufactured by forming NAO friction material composition, can satisfy the legal requirement with respect to the minimum amount of the copper component and can satisfy the required performance with respect to the braking effectiveness, the crack resistance, and the fade resistance, thereby offering highly practical and valuable product.

## Claims

1. A friction material for a disc brake pad, which is manufactured by forming a nonasbestosorganic (NAO) friction material composition that contains a binder, a fiber base material, a friction modifier, a lubricant, a pH adjuster, and a filler, wherein
said friction material composition contains, as the friction modifier, 5 - 30 mass % of a layer crystal structure titanate, which has 0.1 or more mass % but 2.5 or less mass % of alkali elution rate which means the mass rate of the alkali metal and the alkali-earth metal eluted from the titanate compound in the water at 80 centigrade, relative to the total amount of the friction material composition.

2. The friction material according to Claim 1, wherein
alkali elution rate of said layer crystal structure titanate is 0.5 mass % or more but 1.5 mass % or less.

3. The friction material according to either Claim 1 or Claim 2, wherein said layer crystal structure titanate is a magnesium potassium titanate.

4. The friction material according to either one of Claim 1, Claim 2, or Claim 3, wherein
said friction material composition contains 5 - 25 mass % of a monoclinic crystal zirconium oxide relative to the total amount of the friction material composition, as the friction modifier and 1 - 5 mass % of a fibrillated organic fiber relative to the total amount of the friction material composition, as the fiber base material.

## Patentansprüche

1. Reibungsmaterial für einen Scheibenbremsbelag, hergestellt durch Bilden einer asbestfreien organischen (NAO) Reibungsmaterialzusammensetzung, welche ein Bindemittel, ein Material auf Faserbasis, ein Reibungsmodifizierungsmittel, ein Schmiermittel, ein pH-Einstellmittel und einen Füllstoff enthält, wobei die Reibungsmaterialzusammensetzung als Reibungsmodifizierungsmittel 5 - 30 Massen-% Titanat mit einer schichtartigen Kristallstruktur enthält, welches eine Alkali-Elutionsrate von 0,1 oder mehr Massen-%, jedoch 2,5 Massen-% oder weniger aufweist, was den Massendurchsatz des Alkalimetalls und des Erdalkalimetalls, eluiert aus der Titanatverbindung in Wasser bei 80°C, bezogen auf die Gesamtmenge der Reibungsmaterialzusammensetzung, bedeutet.

2. Das Reibungsmaterial nach Anspruch 1, wobei die Alkali-Elutionsrate des Titanats mit einer schichtartigen Kristallstruktur 0,5 Massen-% oder mehr, jedoch 1,5 Massen-% oder weniger, beträgt.

3. Das Reibungsmaterial nach Anspruch 1 oder Anspruch 2, wobei das Titanat mit einer schichtartigen Kristallstruktur Magnesium-Kalium-Titanat ist.

4. Das Reibungsmaterial nach einem der Ansprüche 1, 2 oder 3, wobei die Reibungsmaterialzusammensetzung 5 - 25 Massen-% Zirkoniumoxid mit monokliner Kristallstruktur, bezogen auf die Gesamtmenge der Reibungsmaterialzusammensetzung, als Reibungsmodifizierungsmittel, sowie 1 - 5 % einer organischen Spleißfaser, bezogen auf die Gesamtmenge der Reibungsmaterialzusammensetzung als Material auf Faserbasis, enthält.

## Revendications

1. Matériau de frottement pour une plaquette de frein à disque, qui est fabriqué en formant une composition de matériau de frottement organique sans amiante (NAO) qui contient un liant, un matériau de base en fibres, un modificateur de frottement, un lubrifiant, un ajusteur de pH et une matière de remplissage, dans lequel ladite composition de matériau de frottement contient, en tant que modificateur de frottement, 5 à 30 % en masse d'un titanate à structure cristalline en couches, qui a un taux d'élution alcaline de 0,1 % en masse ou plus mais de 2,5 % en masse ou moins, ce qui signifie le taux massique du métal alcalin et du métal alcalino-terreux élué du composé titanate dans l'eau à 80 °C, par rapport à la quantité totale de la composition de matériau de frottement.

2. Matériau de frottement selon la revendication 1, dans lequel le taux d'élution alcaline dudit titanate à structure cristalline en couches est de 0,5 % en masse ou plus mais de 1,5 % en masse ou moins.

3. Matériau de frottement selon la revendication 1 ou la revendication 2, dans lequel ledit titanate à structure cristalline en couche est un titanate de magnésium et de potassium.

4. Matériau de frottement selon l'une ou l'autre des revendications 1, 2 ou 3, dans lequel ladite composition de matériau de frottement contient 5 à 25 % en masse d'un oxyde de zirconium à cristal monoclinique par rapport à la quantité totale de la composition de matériau de frottement, en tant que modificateur de frottement et 1 à 5 % en masse d'une fibre organique fibrillée par rapport à la quantité totale de la composition de matériau de frottement, en tant que matériau de base de la fibre.
